# EUROPEAN PATENT SPECIFICATION

(11) **EP 1 358 220 B1**
(45) Date of publication and mention of the grant of the patent: **22.11.2006**
(21) Application number: 01270557.0
(22) Date of filing: 15.12.2001
(51) Int. Cl.: C08F 4/64

(54) **CATALYST OBTAINED BY PREPOLYMERIZATION OF POLYOLEFIN AND OLEFIN POLYMERIZATION METHOD USING THE SAME**
DURCH VORPOLYMERISATION VON POLYOLEFIN ERHALTENER KATALYSATOR UND OLEFINPOLYMERISATIONSVERFAHREN UNTER VERWENDUNG DES KATALYSATORS
CATALYSEUR OBTENU PAR PREPOLYMERISATION DE POLYOLEFINE ET PROCEDE DE POLYMERISATION D'OLEFINE AU MOYEN DUDIT CATALYSEUR

(30) Priority: 16.12.2000 KR 2000077394
(43) Date of publication of application: 05.11.2003
(73) Proprietor: Samsung General Chemicals Co., Ltd., Seosan-shi, Chungcheongnam Province 356-870 (KR)
(72) Inventor: KOO, Young-Soo, Yuseong-ku, 305-390 Daejon (KR); CHUN, Yong, Yuseong-ku, 305-390 Daejon (KR); LEE, Young-Jun, Yuseong-ku, 305-390 Daejon (KR); SON, Ho-Sang, Songpa-ku, 138-200 Seoul (KR); RO, Ki-Su, Chungcheongnam-do,356-711,Republic Korea (KR)
(74) Representative: Laufhütte, Dieter
(86) International application number: PCT/KR2001/002181
(87) International publication number: WO 2002/048206

(56) References cited:
- JP-A- 6 157 652
- JP-A- 11 158 212
- US-A- 5 021 382
- US-A- 5 618 886
- US-A- 5 948 872

## Description

### Technical Field

The present invention relates to a prepolymerized catalyst obtained by prepolymerization of polyolefin and an olefin polymerization method using the same. More specifically, the present invention relates to a prepolymerized olefin polymerization catalyst prepared in such a way that macromononers of high molecular weight are encapsulated around the catalyst optimized for olefin polymerization, and to a method for polymerization of polyolefin with high melt strength by using the prepolymerized catalyst.

### BACKGROUND ART

Conventional polypropylenes with linear structure are not suitable for the process which is conducted in a melt state (for example, foaming, heat molding, extrusion coating) because of its low melt strength in comparison with polyethylene. However, when a long chain branch is introduced to the polymer, it shows high melt strength as it shows easy flow properties by reducing attraction forces between macromolecular chains during the processing and it functions as increasing the melt strength by crosslinking between neighboring long chains during molding process (especially, in a use requiring value stabilities such as a large scale blow). As a method for producing high melt strength polyolefins by introducing these long chain branches, a method comprising following steps was generally used: forming radicals of polyolefins coming out of the polymerization reaction vessels through electronic radiation or reaction extrusion method, reacting these radicals and thereby forming long chain branches in a chain type polyolefins. Therefore, if a polymerization method capable of directly polymerizing polyolefins useful as molding material and with high melt strength during polymerization steps could be developed, it is expected that the use of polyolefin as molding materials would be expanded.

### DISCLOSURE OF INVENTION

In order to produce polyolefin with high melt strength at polymerization stage, the object of the present invention is to provide prepolymerized olefin polymerization catalyst and the method for polymerizing olefin by using the catalyst. The olefin prepolymerized catalyst of the present invention have funtionalized active site which can introduce long chain branch to the polymer and include macromolecular monomer, and by using this catalyst in polymerizing olefin and introducing long branch into the polymer during polymerization, polyolefin with high melt strength can be produced.

The present invention relates to a catalyst encapsulated with macromoners around it (hereinafter referred to as 'prepolymerized catalyst') and which is capable of forming branches to the olefin polymers, wherein said catalyst is prepared by prepolymerization of solid titanium catalyst for olefin polymerization with olefin macromoner/mutifuntional compounds, and also relates to a method for high melt strength polyolefin polymerization by using the prepolymerized catalyst.

The term "polymerization" herein has the meaning including preparation of copolymerization of an olefin with other α-olefins as well as preparation of monopolymer of olefin.

The prepolymerized catalyst of the present invention is prepared by surface treating solid titanium catalyst for olefin polymerization with silane compounds having vinyl group of two or more of double bonds, and then conducting prepolymerization reactions by mixing the surface treated catalyst and mixture of olefin monomer and vinyl terminated polysiloxane with double bond at the terminal group, thereby encapsulating the catalyst by polymerizing the macromonomer around the catalyst. Compared to the solid titanium catalyst, the prepolymerized catalyst according to the present invention has good catalyst activities, and is capable of polymerizing a polymer having broad molecular weight distribution and high solid regularity and also capable of forming long chain branches to the polyolefins.

As the solid titanium catalysts used in the preparation of the prepolymerized catalyst of the present invention, any of the conventional solid titanium catalyst for polyolefin polymerization may be used, and it may be prepared by various methods. For example, it may be prepared by directly contacting the magnesium compounds free of reducibility with the titanium compound in a liquid state in the presence of electron donors not having active hydrogen, i.e, directly contacting each said reactants in the liquid state, or it may be prepared by forming solid catalyst with magnesium compounds and titanium catalyst in the absence of electron donors having no active hydrogen and then reacting by contacting the catalyst thus obtained with electron donors.

Among the preparation methods of solid titanium catalyst used in the preparation of the prepolymerized catalyst of present invention, the most common methods are, for example, comprise the following steps of contacting the magnesium compounds with the titanium compounds having at least one or more halogen atoms, and if necessary, treating the products thus obtained with electron donors. Some of above methods are described in German Patent Laid open Nos. 2,230,672, 2,504,036, 2,553,104 and 2,605,922, and Japanese Patent Laid open Nos. 51-28189; 51-136625 and 52-87486. Further, a method for preparing solid titanium compounds containing electron donors from titanium compounds in a liquid state which is derived from liquid state magnesium is described in Japanese Patent Laid open No. 79-40293.

Also, as solid titanium catalyst used in the preparation of the prepolymerized catalyst of present invention, the conventional Ziegler-Natta catalyst, which is described in U.S Patent Nos. 4,482,687; 4,277,372; 3,642,746; 3,642,772; 4,158,642; 4,148,756; 4,477,639; 4,518,706; 4,946,816; 4,866,022; 5,013,702; 5,124,297; 4,330,649; European Patent No. 131,832; Japanese Patent Laid open Shou 63-54004 etc., may be used.

One preferable example among the methods for preparing the solid titanium catalyst is as follows, and in the examples of the present invention, magnesium supported solid complex titanium catalyst was prepared by these methods and then used, i.e.,
(i) preparing magnesium compounds solution by dissolving magnesium compounds having no reducibility into electron donors,
(ii) reacting thus magnesium solution with transition metal compounds, silicone compounds, tin compounds or a mixture thereof and thereby precipitating solid particles,
(iii) then, reacting the precipitated solid particles with titanium compounds and electron donors, then washing with hydrocarbon and thereby preparing solid catalyst particles having controlled particle types.

The magnesium compounds having no reducibility used in the preparation of solid titanium catalyst as above includes magnesium halides such as magnesium chloride, magnesium bromide, magnesium iodide and magnesium fluoride, alkoxy magnesium halides such as methoxy magnesium chloride, ethoxy magnesium chloride, isopropoxy magnesium chloride, butoxy magnesium chloride and octoxy magnesium chloride, aryloxy magnesium halides such as phenoxy magnesium chloride and methylphenoxy magnesium chloride, alkoxy magnesium such as ethoxy magnesium, isopropoxy magnesium, butoxy magnesium and octoxy magnesium, aryloxy magnesium such as phenoxy magnesium and dimethyl magnesium and magnesium salts of carboxylic acid such as lauryl magnesium and stearic acid magnesium.

These magnesium compounds can be used in the form of complex compound of other metals or with a mixture of other metals, or a mixture of two or more magnesium compounds. Preferably, these magnesium compounds are magnesium compounds containing hydrogen, magnesium chloride, alkoxy magnesium chloride, preferably alkoxy magnesium chloride having C₁ ~ C₁₄ alkoxy groups and aryloxy magnesium chloride, preferably aryloxy magnesium chloride having C₅ ~ C₂₀ aryloxy groups.

Generally, the above mentioned compounds can be represented as a simple chemical formula, but sometimes there is a case it can not be represented as such according to the method for their preparation. Such compounds are generally considered to be a mixture of above mentioned compounds. For example, compounds obtained by a method which is reacting magnesium compounds with alcohols or phenols in the presence of halosilane, phosphate pentachloride or thionly chloride and by pyrolysis of Grignard reagent or a degradation method using hydroxyl groups, carbonyl ester bond, ether bond or similar kind of compounds are what they are considered to be a mixture of various compounds depending on the reagents or degree of reaction. And these compounds also can be used in the present invention.

The magnesium compounds are reacted with one or more electron donors which are selected from the groups consisting of alcohols, organic carboxylic acids, aldehydes, amines and a mixture thereof, and thereby producing a solution of magnesium compounds. A solution of magnesium compounds can be produced by mixing hydrocarbon solvent with electron donors and then heating them. Examples of hydrocarbon solvent used for these object include aliphatic hydrocarbons such as pentane, hexane, heptane, octane, decane, dodecane and kerosene, cyclic hydrocarbones such as cyclopentane, methycyclopentane, cyclohexane and methylcyclohexane, aromatic hydrocarbons such as benzene, toluene, xylene, ethylbenzene, cumene and simene and halo hydrocarbons such as dichloroethane, dichloropropane, dichloroethylene, trichloroetylene, tetrachlorocarbon and chlorobenzene.

In the step (i) of prapraring a solution of magnesium compounds, when alcohol is used as an electron donor to dissolve magnesium compounds having hydrogen in hydrocarbon solvents, the suitable alcohols /magnesium compounds molar ratio is at least 0.5mol, preferably about 1.0 to 20mol, more preferably about 2.0 to 10mol.

When aliphatic hydrocarbons or cyclic hydrocarbons are used as hydrocarbon solvents, alcohols are used as above mentioned amounts, however, if alcohols having 6 or more carbon atoms among these alcohols are used and the alcohols/magnesium compounds molar ratio is at least 0.5, preferably 1 or more, the magesium compounds having halogen can be dissolved and catalyst components having high performaces can be obtained by using small amount of alcohols. And if alcohols having 5 or less carbon atoms are used, the total amount of alcohols should be at least about 15 moles per magnesium compounds having halogen, and the catalyst components thus obtained has catalytic activities less than those obtained by using alcohols of previously mentioned method. On the other hand, when aromatic hydrocarbons are used as hydrocarbon solvents, magnesium compound having hydrogen can be dissolved by using about 20 moles, preferably about 1.5 to 12 moles per magnesium compounds having hydrogen irrespective of the types of alcohols.

The reaction of contacting magnesium compounds with electron donor alcohols is conducted in the medium of hydrocarbons. These contacting reactions are carried out at room temperature or high temperature, for example, about 30°C to 200 °C, preferably about 60 °C to 150°C for about 15 minutes to about 5 hours, preferably about 30 minutes to about 3 hours.

Examples of alcohols used as electron donor in the step (i) include aliphatic alcohols having at least 6 carbon atoms, preferably 6 to 20 carbon atoms such as 2-methylpentanol, 2-ethylbutanol, n-heptanol, n-octanol, 2-ethylhexanol, decanol, dodecanol, tetradecyl alcohol, undecenol, oleyl alcohol and stearyl alcohol, cyclic alcohols such as cyclohexanol and methylcyclohexanol and aromatic alcohols such as benzyl alcohol, methylbenzyl alcohol, isopropylenebenzyl alcohol, α-methylbenzyl alcohol and α, α-dimethylbenzyl alcohol. Examples of alcohols having 5 or less carbon atoms include methanol, ethanol, propanol, butanol, ethyleneglycol and methylcarbitol.

The solutions of magnesium compounds thus obtained are reacted with transition metal compounds such as titanium compounds, silicon compounds, tin compounds or mixtures thereof and then crystallizes into a globular solid material (step (ii)). At this time, the amount of the transition metal etc used may be suitably changed. For example, the suitable amount of transition metal compounds, silicon compounds, tin compounds or mixtures thereof per 1 mole of magnesium compounds is in the range of 0.1mol to 20 mol, preferably 0.1 mol to 10 mol, more preferably 0.2 mol to 2 mol.

In the step (ii), when the magnesium compounds in the liquid state are crystallized, the shape and size of the magnesium carrier changes according to the reaction conditions, and preferably, the temperature of contacting reaction is in the range of about -70 °C to 200°C . However, it is preferable that this reaction is conducted in the range of about 20°C to 150°C because it is generally preferable to avoid high temperature during the mixing process to obtain particulate or globular type precipitate or the precipitate of solid products does not occur if the contacting temperature is too high.

Solid complex titanium catalyst is produced by reacting magnesium compounds in the solid particulate state thus obtained with titanium compounds and electron donors (step (iii)). Examples of electron donors used in this step include generally electron donors having oxygen atom such as water, alcohols, phenols, ketones, aldehydes, carboxylic acids, esters and acid amides, electron donors having nitrogen atom such as ammonia, amines, nitriles and isocyanic acid salts, more particularly alcohols having 1 to 18 carbon atoms such as methanol, ethanol, propanol, pentanol, hexanol, octanol, dodecanol, octadecyl alcohol, benzyl alcohol, phenlyethyl alcohol, cumyl alcohol and isopropylbenzyl alcohol, ketones having 6 to 15 carbon atoms which is capable of having lower phenyl groups such as phenol, cresol, xylene, ethylphenol, propylphenol, cumylphenyl and naphthol, aldehydes having 2 to 15 carbon atoms such as acetaldehyde, propionylaldehyde, octylaldehyde, benzaldehyde, tolueyl aldehyde and nathphaldehyde, organic acid esters having 2 to 18 carbon atoms such as methylformate, methylacetate, vinylacetate, propylacetate, octylacetate, cyclohexylacetate, ethylpropionate, methylbutyrate, ethylvalerate, methylchloroacetate, ethyldichloroacetate, methylmetacrylate, ethylcrotonate, ethylcyclohexylcarboxylate, phenylsalicylate, methyltoluate, ethyltoluate, amyltoluate, ethylethylsalicylate, methylanistate, ethylanistate, ethylethoxysalicylate, γ-buyrolactone, δ-butyrolactone, coumarine, phthalate, cyclohexylacetate, methylvalerate, etyhlcitrate, phenylbenzoate, propylbenzoate, butylbenzoate, cyclohexylbenzoate and ethylene carbonate, acid halides having 2 to 15 carbon atoms such as acetylchoride, benzylchoride, tolueylchloride and anisylchloride, ethers such as methylether, ethylether, isopropylether, butylether, amylether, tetrahydrofuran, anisole and diphenylether, amines such as methylamine, ethylamine, diethylamine, tributylamine, piperidine, tribenzylamine, aniline, pyridine, pynoline and tetramethylethylenediamine, nitriles such as acetonitrile, benzonitrile and tolunitrile and compounds of aluminum, silicon and tin etc having above mentioned funtional groups within the molecules. Also, ester derivatives of monoethyleneglycol(MEG), diethyleneglycol(DEG), triethyleneglycol(TEG), polyethyleneglycol(PEG), monopropyleneglycol(MPG) and dipropyleneglycol(DPG) such as of acetate, propionate, n- and iso-butyrate, benzoate, toluate etc can preferably be used. Examples of these benzoate ester derivatives include monoethyleneglycolmonobenzoate , monoethyleneglycoldibenzoate, diethyleneglycolmonobenzoate, diethyleneglycoldibenzoate, triethyleneglycolmonobenzoate, triethyleneglycoldibenzoate, monopropyleneglycolmonobenzoate, dipropyleneglycolmonobenzoate, dipropyleneglycoldibenzoate, tripropyleneglycolmonobenzoate etc. These electron donors can be used as a mixture of 2 or more thereof, preferably, esters of aromatic compounds are suitable. However, these electron donors are not always needed as starting materials and they can be used as adducts of other compounds or complex compounds. The amount of these electron donors can be correspondingly changed, and it can be used, preferably, in the range of about 0.001 mol to about 10 mol, more preferably, 0.01 mol to 5 mol, most preferably, 0.05 to about 1, per mole of the magnesium compounds.

Examples of the titanium compounds in the liquid state to be reacted with the magnesium compounds in the solid particulate state in the step (iii) are preferably tetravalent titanium compounds of the formula Ti(OR)mX₄-m(wherein R represents hydrocarbon group having 1 to 10 carbon atoms, X represents a halogen atom and m is a number represented by 0 ≤ m ≤ 4). Examples of these titanium compounds are titanium tetrahalides such as TiCl₄, TiBr₄ and TiI₄, titanium trihalides such as Ti(OCH₃)Cl₃, Ti(OC₂H₅)Cl₃, Ti(OC₄H₉)Cl₃, Ti(OC₂H₅)Br₃ and Ti(O(i-C₂H₅))Br₃, alkoxy titanium dihalides such as Ti(OCH₃)₂Cl₂, Ti(OC₂H₅)₂Cl₂, Ti(OC₄H₉)₂Cl₂ and Ti(OC₂H₅)₂Br₂, alkoxy titanium monohalides such as Ti(OCH₃)₃Cl, Ti(OC₂H₅)₃Cl, Ti(OC₄H₉)₃Cl and Ti(OC₂H₅)₃Br, tetraalkoxy titanium such as Ti(OCH₃)₄, Ti(OC₂H₅)₄, Ti(OC₄H₉)₄ and mixtures thereof. Among these the halogen-containing titanium compounds, particularly titanium tetrahalides, more particularly titanium tetrachlorides are preferred.

These titanium compounds are used at least 1 mole, commonly 3 moles to about 200 moles, preferably about 5 moles to 100 moles per mole of magnesium compounds. When contacting magnesium compounds with titanium compounds in the liquid state, it is preferable that the reaction temperature is maintained at low temperature during mixing, and then gradually increased. For example, contacting reaction of the two compounds are conducted at -70 °C to about 50 °C so that the reaction is not proceed rapidly, and then the reaction temperature is gradually increased and maintained for a sufficient time at 50°C to 150°C, and then the products are washed with hydrocarbons used in the polymerization reaction until the free titanium is not detected. According to these preparation method for catalyst, solid titanium catalyst with high performances can be prepared.

It is preferable that the solid titanium catalyst used in the present invention has more than about 4 of halogen/titanium molar ratio, and does not essentially liberate free titanium compounds by washing with hexane at room temperature. Preferable examples of solid titanium catalyst are catalyst that the halogen/titanium molar ratio is about 4 or more, more preferably about 5 or more, most preferably about 8 or more, the magnesium/titanium molar ratio is in the range of about 3 or more, more preferably about 5 to 50 and the electron donor/titanium molar ratio is about 0.2 to about 6, more preferably about 0.4 to about 3, further more preferably about 0.8 to about 2. Further, specific area of the solid is 10 m²/g or more, more preferably 50 m²/g or more, most preferably 100 m²/g or more. It is preferable that the X-ray spectrum of the solid titanium catalyst represents amorphous properties irrespective of the starting magnesium compounds or more amorphous state than the common magnesium dihalides of the commercial grade.

To prepare the prepolymerized catalyst according to the present invention, firstly surface of the solid complex titanium catalyst as above mentioned is treated with silane compounds having two or more vinyl groups. Examples of the divinyl type silane compounds used at this stage are divinyl dimethyl silane, divinyl diphenyl silane, divinyl diethyl silane, divinyl diisobutyl silane, divinyl silane dihydride. These compounds are used in the amount of 2 mole to 200 moles per mole of magnesium compounds when they are used in the surface treatment. When silane compound of below 2 moles per 1 mole of magnesium compound is used, long chain cannot be effectively made due to the shortage of the silane compound and the effect is not substantially improved. When silane compound of over 200 moles per 1 mole of magnesium compound is used, substantial reduction of catalyst activity makes it impossible to use the catalyst in the polymerization process. The reaction between the solid titanium catalyst and these compounds for surface treatment is conducted by contacting these two compounds at - 70°C to 50 °C and at this time, solvents may or may not be used.

To prepare the prepolymerized catalyst according to the present invention, prepolymerization reaction is carried out against the solid titanium catalyst thus surface treated. The prepolymerization process is conducted by reacting olefin monomers with vinyl terminated polysiloxane with double bond at the terminal group at the temperature or -50°C to 50°C in the presence of above surface treated solid titanium catalyst, aluminum alkyl and electron donors, thereby polymerizing macromonomers on the surface of the catalyst through the simultaneous reaction of compounds having double bond and treated on the catalyst surface, olefin monomers and vinyl terminated polysiloxane with double bond at the terminal group. The macromonomers are composed of olefins, silane compounds having double bonds and vinyl terminated polysiloxane compound with double bond at the terminal group and encapsulates the catalyst surface. The composition of olefin, vinyl terminated polysiloxane with double bond at the terminal group and silane compounds in the macromonomers thus produced is composed of 1 to 99 weight percent of olefins, 0.01 to 10 weight perecent vinyl terminated polysiloxane with double bond at the terminal group, and 0.001 to 1 weight percent of silane compounds. Among these, preferably the compounds are composed of 70 to 95 weight percent of olefins, 0.1 to 5 weight perecent vinyl terminated polysiloxane with double bond at the terminal group, 0.01 to 1 weight percent of silane compounds. Examples of olefin monomers used at this stage are one or more compounds selected from the group consisting of ethylene, propylene, 1-butene, 1-hexene and 1-octene, and vinyl terminated polysiloxane with double bond at the terminal group can have structure as below.

H₂C=CH-SiR₂-O-(SiR₂-O)ₙ- SiR₂-CH=CH₂

(n = 0 ~ 100, R = alkyl, alkoxy, hydrogen or phenyl)

The macromonomers polymerized around the catalyst are reacted with propylene monomers during the main polymerization reaction and thereby forms long chain branches or networks. The molecular weight of these macromonomers is preferably in the range of 500 to 100,000, and among these, the compounds which is showing excellent polymerization activities in the main polymerization reaction are molecules having molecular weight in the range of 1000 to 10,000.

The prepolymerized catalyst thus produced according to the present invention is useful for polymerization of olefins such as ethylene, propylene, 1-butene, 3-methyl-1-butene, 4-methyl-1-butene, vinylcycloalkane or cycloakane. Particularly, these catalysts are useful for polymerization of α-olefins having 3 or more carbon atoms, copolymerization between these compounds, copolymerization between these compounds having 20 mole percent or less of ethylene and copolymerization between polyunsaturated compounds such as conjugated or nonconjugated dienes.

The method for olefin polymerization according to the present invention is comprising polymerizing or copolymerizing olefins in the presence of catalyst system which is composed of component (a), (b) and (c):
(a) the prepolymerized catalyst produced by above mentioned method, i.e, macromonomer encapsulated-prepolymerized catalyst which is obtained by prepolymerizing olefin monomer and diene compounds with solid titanium compounds which is essentially composed of magnesium compounds, titanium compounds, electron donors and silane compounds having 2 or more double bonds.
(b) Organometallic compounds of Group I or III metals of the Periodic Table.
(c) external electron donors.

Examples of the organometallic compounds used as cocatalyst in the polymerization method of the present invention are trialkylaluminum such as triethylaluminum and tributylaluminum, trialkenylaluminum such as triisoprenylaluminum, partially alkoxylated alkylaluminum (for example, dialkylaluminumalkoxide such as diethylaluminumethoxide and dibutylaluminumbutoxide, alkylaluminum sesquialkoxide such as ethylaluminum sesquiethoxide and butylaluminum sesquiethoxide), alkylaluminum halides such as ethylaluminum dichloride, propylaluminum dichloride and butylaluminum dibromide, partially halogenated aluminum, aluminum hydride, dialuminum hydride such as diethylaluminum hydride and diethylaluminum hydride and partially alkoxylated halogenated alkylaluminum such as butylaluminum butoxychloride and ethylaluminum ethoxybromide. Among these, trialkylaluminum is preferable.

External electron donors(c) used in the polymerization method of the present invention may be a external electron donor materials which is conventionally used in the polymerization of olefins. Such a external electron donors are generally used to optimize the catalytic activities and stereoregularities in the olefin polymerization. Examples of the external electron donors which is useable in the present invention are organic compounds containing oxygen, silicon, nitrogen, sulfur and phosphorus atoms such as organic acid, organic acid anhydride, organic acid ester, alcohol, ether, aldehyde, ketone, silane, amine, amine oxide, amide, diol, phosphate ester and mixtures thereof. Particularly preferable external electron donors are organic silicon compounds having alkoxy groups, i.e, alkoxy silane, and examples of these compounds include aromatic silanes such as diphenyldimethoxy silane, phenyltrimethoxy silane, phenylethyldimethoxy silane and phenylmethyldimethoxy silane, aliphatic silanes such as isobutytrimethoxy silane, diisobutydimethoxy silane, diisopropyldimethoxy silane, di-t-butyldimethoxy silane, t-butyltrimethoxy silane, cyclohexylmethyldimethoxy silane, dicyclopentyldimethyldimethoxy silane, dicyclohexyldimethoxy silane, 2-novonantriethoxy silane, 2-novonanmethyldimethoxy silane and vinyltriethoxy silane and mixtures thereof, among these compounds, particularly branched alkyl dialkoxy silane such as diisobutyl dimethoxy silane and cycloalkyl dialkoxy silane such as dicyclopentyl dimethoxy silane are effective. The above compounds can be used as a single or as mixtures thereof.

When the polymerization method of the present invention is applied to liquid state polymerization, inactive solvents such as hexane, heptane or kerosene can be used as a reaction medium, and also the olefin itself can be used as reaction medium. In the case of liquid state polymerization process, preferable concentration of the prepolymerized catalyst(a) in the polymerization reaction system is about 0.001 to about 5 mmol, more preferably about 0.001 to about 0.5mmol, calculated in the basis of titanium atoms in the 1 liter of solvents. In the case of gaseous state polymerization, preferable amount of the prepolymerized catalyst(a) is about 0.001 to about 5 mmol, more preferably about 0.001 to about 1.0mmol, further preferably 0.01 to about 0.5mmol, calculated in the basis of titanium atoms in the 1 liter of polymerization zone.

Also, the ratio of organometallic atoms in the component(b) is about 1 to 2,000mol, preferably about 5 to 500mol per mole of titanium atom in the catalyst(a) and the ratio of external electron donors (component(c)) is about 0.001 to 10mol, preferably about 0.01 to 2mol, more preferably about 0.05 to 1mol per mole of organometallic atoms in the component(b), calculated in the basis of nitrogen or silicon atoms.

The olefin polymerization or copolymerization in the presence of the catalyst system of the present invention is conducted as the same way as in the olefin polymerization process using conventional Ziegler-type catalyst. Particularly, the polymerization or copolymerization is essentially conducted in the absence of oxygen or water. The polymerization reaction of olefins may be conducted, preferably at the temperature of about 20 °C to 200 °C , more preferably about 50 °C to 180 °C and under the pressure of atmospheric pressure to 100 atms, more preferably about 2 to 50 atms. These polymerization can be conducted bacthwise, semibachwise or continously, or it can be conducted in the steps more than 2 having different reaction conditions.

### Best Mode for Carrying out the Invention

The following examples and comparative examples illustrate the present invention more specifically, but the present invention is not limited thereto.

### Example 1

Preparation of the prepolymerized catalyst(a)

### Step 1 : Preparation of solution of magnesium compound

A mixture of MgCl₂ 15g, AlCl₃ 4.2g and toluene 550ml was added to 1.0*l* reaction vessel which is replaced with nitrogen atmosphere and equipped with a mechanical agitator, and the reaction vessel was agitated at 400rpm, and then after adding tetrahydrofuran 30ml, butanol 28ml, ethanol 1.4ml, silicon tetraethoxide 1.5ml and tributylphosphate 3.0ml to the reaction vessel and the temperature was raised to 105°C, and then the reaction was conducted at this temperature for 4 hours. The uniform solution obtained after the completion of reaction was cooled to room temperature.

### Step 2 : Preparation of solid support materials

The magnesium solution prepared in the step 1 was transferred to a 1.61 reaction vessel whose temperature was maintained at 13°C. The agitation speed was controlled at 350rpm, and then TiCl₄ 15.5ml was added and the reaction temperature was raised to 90°C. During this processes, solid support materials are precipitated. The reaction was continued for 1 hour at 90°C and then the agitation was stopped, thereby precipitated the solid support materials produced. After the completion of precipitation process, the solid support material separated from supernatants was washed with 75ml of toluene twice.

### Step 3 : Preparation of the solid titanium catalyst

After adding toluene 100ml and TiCl₄ 100ml to the solid support material, the temperature of the reaction vessel was raised to 110°C and maintained for 1 hour at this temperature. Agitation was stopped, the solid support material was precipitated and then supernatant was separated, and toluene 100ml and TiCl₄ 100ml was added and then diisophthalate 2.9ml was added. The temperature of the reaction vessel was raised again to 120 °C and the reaction vessel was agitated for 1 hour. Agitation was stopped, the supernatant was separated, and then adding toluene 100ml, reaction vessel temperature was cooled to 70 °C and the reaction vessel was agitated for 30 minutes. Agitation of the reaction vessel was stopped and the supernatant was separated, and then the solid titanium catalyst was prepared by adding TiCl₄ 100ml and agitating for 30 minutes at 70°C.

### Step 4 : Surface treatment of the solid titanium catalyst

The solid titanium catalyst thus prepared was washed 5 times with purified hexane 75ml, and then hexane 500ml and divinyldimethyl silane 50ml was added and the reaction was carried out for 1 hour at room temperature. The catalyst thus prepared was dried under the nitrogen atmosphere and then stored. The surface treated solid titanium catalyst was contained 2.5 weight percent of titanium atom.

### Step 5 : Prepolymerization

A 0.5*l* reaction vessel for high pressure reaction was washed with propylene, and then 2g of catalyst obtained in the above step 4, hexane 300ml, triethylaluminum 6mmol, polydimethylsiloxane(H₂C=CH-Si(CH₃)₂-O-Si(CH₃)₂-CH=CH₂) with double bond at the terminal group 20ml was added to this reaction vessel, the pressure was controlled to 0.9 atm with ethylene, and then the polymerization reaction was conducted for 5 hours at 20°C. For the prepolymerized catalyst thus obtained, the amount of macromonomers polymerized around the catalyst was 31.0g per 1g catalyst.

### Step 6 : polymerization

A 2*l* reaction vessel for high pressure reaction was washed with propylene, and then 20mg of prepolymerized catalyst thus prepared and contained within a glass bottle was setted within this reaction vessel, and after the inside of the reaction vessel was made into nitrogen state/vacuum state three times alternatively, and then made into atmospheric pressure state. Triehtylaluminum 7mmol, dicyclopenyldimethoxy silane 0.5mmol, diisopropyldimetoxy silane 0.5mmol was added to the reaction vessel. Further, hydrogen 300Nml was added, and subsequently propylene in the liquid state 1,200ml was added, and then the temperature was raised to 65°C while agitating, the polymerization reaction was conducted for 1 hour at this temperature. After the completion of the polymerizatio reaction, unreacted gases were exhausted, after the reaction vessel was cooled to room temperature, it was dismembered. The polymers thus obtained were collected and dried in a vacuum oven for more than 6 hours at 50°C. As a result, a white polymer was obtained

### Step 7 : Measurement of the melt strength

The melt strength of the polymer prepared according to the above polymerization method was measured by measuring the melt strength of the strand that is coming out of the die of extruder (Blabender) at 220 °C by using Reotense (QötFerster, Germany), and the result was shown in the following Table I. When measuring, the diameter of the die was 2mm, the distance from the entrance of the die to Reotense roller was 10cm.

### Example 2

This example is the same as in the example 1 except that (H₂C=CH-Si(CH₃)₂-O-(Si(CH₃)₂-O)₃-Si(CH₃)₂-CH=CH₂) is used as vinyl terminated polysiloxane with double bond at the terminal group during the prepolymerization reaction of the macromonomers, and the melt strength of the polymer thus prepared was measured, the result was shown in the following Table I.

### Example 3

This example is the same as in the example 1 except that (H₂C=CH-Si(CH₃)₂-O-(Si(CH₃)₂-O)₅-Si(CH₃)₂-CH=CH₂)is used as vinyl terminated polysiloxane with double bond at the terminal group during the prepolymerization reaction of the macromonomers, and the melt strength of the polymer thus prepared was measured, the result was shown in the following Table I.

### Example 4

This example is the same as in the example 1 except that (H₂C=CH-Si(CH₃)₂-O-(Si(CH₃)₂-O)₂₁-Si(CH₃)₂-CH=CH₂) is used as vinyl terminated polysiloxane with double bond at the terminal group during the prepolymerization reaction of the macromonomers, and the melt strength of the polymer thus prepared was measured, the result was shown in the following Table I.

### Example 5

This example is the same as in the example 1 except that (H₂C=CH-Si(CH₃)₂-O-(Si(CH₃)₂-O)₃₅-Si(CH₃)₂-CH=CH₂) is used as vinyl terminated polysiloxane with double bond at the terminal group during the prepolymerization reaction of the macromonomers, and the melt strength of the polymer thus prepared was measured, the result was shown in the following Table I.

### Example 6

This example is the same as in the example 1 except that (H₂C=CH-Si(CH₃)₂-O-(Si(CH₃)₂-O)₅₂-Si(CH₃)₂-CH=CH₂) is used as vinyl terminated polysiloxane with double bond at the terminal group during the prepolymerization reaction of the macromonomers, and the melt strength of the polymer thus prepared was measured, the result was shown in the following Table I.

### Example 7

This example is same as in the example 1 except that 1000Nml of hydrogen was added during the prepolymerization reaction of the macromonomers, and the result was shown in the following Table I.

### Example 8

This example is same as in the example 1 except that 50Nml of hydrogen was added during the prepolymerization reaction of the macromonomers, and the result was shown in the following Table I.

### Examples 9

This example is same as in the example 1 except that propylene monomer was used instead of ethylene monomer during the prepolymerization reaction of the macromonomers, and the result was shown in the following Table

### Comparative example 1

This example is same as in the example 1 except that the prepolymerization reaction of the macromonomers was not conducted, and the melt strength of the polymer thus prepared was measured, the result was shown in the following Table I.

**Table 1**

| | Polymerization activitiy (kg-PP/g-cat) | MI(g-PP/10min) | Melt strength (mN) |
|---|---|---|---|
| Example 1 | 32 | 0.8 | 172 |
| Example 2 | 32 | 0.9 | 143 |
| Example 3 | 30 | 1.1 | 121 |
| Example 4 | 29 | 1.4 | 97 |
| Example 5 | 28 | 1.4 | 84 |
| Example 6 | 28 | 1.4 | 75 |
| Example 7 | 34 | 1.9 | 142 |
| Example 8 | 26 | 0.2 | 212 |
| Comparative example 1 | 36 | 1.5 | 40 |

As shown in above examples and comparative examples, according to the polymerizaton method of the present invention using prepolymerized catalyst, the melt strength of the polymer can be increased without causing big changes in the polymerization activity in comparison with the polymerization method using conventional catalyst.

As a result, by using the present catalyst for olefin polymerization and the method for the same, the polyolefin with melt strength suitable for the use of process which is carried out in the melt state such as foaming, heat shaping and extrusion coating can be effectively provided.

## Claims

1. A prepolymerized olefin polymerization catalyst encapsulated with macromolecular monomers around said catalyst, said prepolymerized catalyst being prepared by prepolymerization of olefin monomer and vinyl terminated polysiloxane compound with double bond at the terminal group in the presence of solid titanium catalyst for olefin polymerization, said solid titanium catalyst being prepared by surface treating solid titanium catalyst composed of magnesium compound, titanium compound and electron donor with silane compound having two or more of vinyl groups.

2. The prepolymerized olefin polymerization catalyst of claim 1, wherein said silane compound having two or more of vinyl groups is divinyldimethylsilane, divinyldiphenylsilane, divinyldiethylsilane, divinyldiisobutylsilane or divinyldihydridesilane.

3. The prepolymerized olefin polymerization catalyst of claim 1, wherein the amount of said silane compound having two or more of vinyl groups used is 2 ∼ 200 mole per 1 mole of magnesium compound.

4. The prepolymerized olefin polymerization catalyst of claim 1, wherein said solid titanium catalyst is prepared by the steps of:
(i) preparing solution of magnesium compound by dissolving magnesium compound having no reducibility into electron donors,
(ii) reacting said magnesium solution with transition metal compounds, silicone compounds, tin compounds or a mixture thereof and thereby precipitating solid particles, and
(iii) reacting said precipitated solid particles with titanium compounds and electron donors.

5. The prepolymerized olefin polymerization catalyst of claim 1, wherein said olefin monomer used in the prepolymerization step is one or more monomer selected from the group consisting of ethylene, propylene, 1-butene, 1-hexene and 1-octene.

6. The prepolymerized olefin polymerization catalyst of claim 1, wherein said vinyl terminated polysiloxane compound with double bond at the terminal group is of the following structure:
H₂C=CH-SiR₂-O-(SiR₂-O)ₙ- SiR₂-CH=CH₂
(n = 0 ~ 100, R = alkyl, alkoxy, hydrogen or phenyl) .

7. The prepolymerized olefin polymerization catalyst of claim 1, wherein said macromolecular monomers encapsulating said prepolymerized catalyst has weight average molecular weight in the range of 500 ~ 100,000, and is composed of 1 ~ 99 weight percent of olefin, 0.01 ~ 10 weight percent of vinyl terminated polysiloxane compound with double bond at the terminal group, and 0.001 ~ 1 weight percent of silane material.

8. A method for polymerization of olefin by using the catalyst system comprising:
(a) the prepolymerized olefin polymerization catalyst of one of claims 1 through 7,
(b) organometallic compound of Group I or III metals of the Periodic Table,
(c) external electron donor.

9. The method for polymerization of olefin of claim 8 wherein said organometallic compound is trialkylaluminum.

10. The method for polymerization of olefin of claim 8 wherein said external electron donor is alkoxy silane compound.

## Patentansprüche

1. Vorpolymerisierter Katalysator für die Polymerisation von Olefin, der in Makromeren um den Katalysator eingebettet ist, wobei der vorpolymerisierte Katalysator durch Vorpolymerisation von Olefinmonomer und vinylendständiger Polysiloxanverbindung mit Doppelbindung an der endständigen Gruppe bei Vorhandensein eines Feststofftitankatalysators für die Olefinpolymerisation erzeugt wird, wobei der Feststoffkatalysator durch Oberflächenbehandeln eines Feststoffkatalysators bestehend aus Magnesiumverbindung, Titanverbindung und Elektronenspender mit einer zwei oder mehr Vinylgruppen aufweisenden Silanverbindung erzeugt wird.

2. Vorpolymerisierter Katalysator für die Polymerisation von Olefin nach Anspruch 1, **dadurch gekennzeichnet, dass** die zwei oder mehr Vinylgruppen aufweisende Silanverbindung Divinyldimethylsilan, Divinyldiphenylsilan, Divinyldiethylsilan, Divinyldiisobutylsilan oder Divinyldihydridsilan ist.

3. Vorpolymerisierter Katalysator für die Polymerisation von Olefin nach Anspruch 1, **dadurch gekennzeichnet, dass** die Menge der zwei oder mehr Vinylgruppen aufweisenden verwendeten Silanverbindung 2 ∼ 200 Mol pro 1 Mol Magnesiumverbindung beträgt.

4. Vorpolymerisierter Katalysator für die Polymerisation von Olefin nach Anspruch 1, **dadurch gekennzeichnet, dass** der Feststofftitankatalysator durch folgende Schritte hergestellt wird:
(i) Erzeugen einer Lösung aus Magnesiumverbindung durch Auflösen einer keine Reduzierbarkeit aufweisenden Magnesiumverbindung in Elektronenspender;
(ii) Zur Reaktion bringen der Magnesiumlösung mit Übergangsmetallverbindungen, Silikonverbindungen, Zinnverbindungen oder einem Gemisch derselben und dadurch Niederschlagen von Feststoffpartikeln und
(iii) Zur Reaktion bringen der niedergeschlagenen Feststoffpartikel mit Titanverbindungen und Elektronenspendern.

5. Vorpolymerisierter Katalysator für die Polymerisation von Olefin nach Anspruch 1, **dadurch gekennzeichnet, dass** das im Vorpolymerisationsschritt verwendete Olefinmonomer ein oder mehrere Monomere gewählt aus der Gruppe bestehend aus Ethylen, Propylen, But-1-en, 1-Hexen und 1-Octen ist.

6. Vorpolymerisierter Katalysator für die Polymerisation von Olefin nach Anspruch 1, **dadurch gekennzeichnet, dass** die vinylendständige Polysiloxanverbindung mit Doppelbindung an der Endgruppe von folgendem Aufbau ist:
H₂C=CH-SiR₂-O-(SiR₂-O)ₙ-SiR₂-CH=CH₂
(n = 0 ∼ 100, R = Alkyl, Alkoxy, Wasserstoff oder Phenyl).

7. Vorpolymerisierter Katalysator für die Polymerisation von Olefin nach Anspruch 1, **dadurch gekennzeichnet, dass** das den vorpolymerisierten Katalysator einbettende Makromer einen Gewichtsmittelwert des Molekulargewichts in dem Bereich von 500 ∼ 100.000 aufweist und aus 1 ∼ 99 Masseprozent Olefin, 0,01 ∼ 10 Masseprozent vinylendständiger Polysiloxanverbindung mit Doppelbindung an der Endgruppe sowie 0,001 ∼ 1 Masseprozent Silanmaterial besteht.

8. Verfahren für die Polymerisation von Olefin durch Verwenden des Katalysatorsystems mit:
(a) dem vorpolymerisierten Katalysator für die Polymerisation von Olefin nach einem der Ansprüche 1 bis 7,
(b) einer metallorganischen Verbindung von Metallen der Gruppe I oder III der Periodentafel,
(c) einem externen Elektronenspender.

9. Verfahren für die Polymerisation von Olefin nach Anspruch 8, **dadurch gekennzeichnet, dass** die metallorganische Verbindung Trialkylaluminium ist.

10. Verfahren für die Polymerisation von Olefin nach Anspruch 8, **dadurch gekennzeichnet, dass** der externe Elektronenspender Alkoxysilanverbindung ist.

## Revendications

1. Catalyseur de polymérisation d'oléfine prépolymérisé encapsulé avec des monomères macromoléculaires autour dudit catalyseur, ledit catalyseur prépolymérisé étant préparé par prépolymérisation d'un monomère d'oléfine et d'un composé poly(siloxane) terminé par vinyle avec une double liaison au niveau du groupe terminal en présence d'un catalyseur solide au titane pour une polymérisation d'oléfine, ledit catalyseur solide au titane étant préparé par traitement de surface d'un catalyseur solide au titane composé d'un composé de magnésium, d'un composé de titane et d'un donneur d'électrons avec un composé au silane ayant deux ou plus groupes vinyle.

2. Catalyseur de polymérisation d'oléfine prépolymérisé selon la revendication 1, dans lequel ledit composé au silane comportant deux ou plus groupes vinyle est le divinyldiméthylsilane, le divinyldiphénylsilane, le divinyldiéthylsilane, le divinyldiisobutylsilane ou le divinyldihydruresilane.

3. Catalyseur de polymérisation d'oléfine prépolymérisé selon la revendication 1, dans lequel la quantité dudit composé au silane comportant deux ou plus groupes vinyle utilisait de 2 à 200 moles pour 1 mole de composé de magnésium.

4. Catalyseur de polymérisation d'oléfine prépolymérisé selon la revendication 1, dans lequel ledit catalyseur solide au titane est préparé par les étapes consistant à:
(i) préparer une solution de composé de magnésium en dissolvant un composé de magnésium n'ayant aucune réductibilité en donneurs d'électrons,
(ii) faire réagir ladite solution de magnésium avec des composés de métal de transition, des composés de silicium, des composés d'étain ou un mélange de ceux-ci et préparer ainsi des particules solides, et
(iii) faire réagir lesdites particules solides précipitées avec des composés de titane et des donneurs d'électrons.

5. Catalyseur de polymérisation d'oléfine prépolymérisé selon la revendication 1, dans lequel ledit monomère d'oléfine utilisé dans l'étape de prépolymérisation est un ou plusieurs monomères choisis dans le groupe consistant en l'éthylène, le propylène, le 1-butène, le 1-hexène et le 1-octène.

6. Catalyseur de polymérisation d'oléfine prépolymérisé selon la revendication 1, dans lequel ledit composé poly(siloxane) terminé par vinyle avec une double liaison au niveau du groupe terminal répond à la structure suivante:
H₂C=CH-SiR₂-O- (SiR₂-O)ₙ-SiR₂-CH=CH₂
(n = 0 à environ 100, R = alkyle, alcoxy, hydrogène ou phényle).

7. Catalyseur de polymérisation d'oléfine prépolymérisé selon la revendication 1, dans lequel lesdits monomères macromoléculaires encapsulant ledit catalyseur prépolymérisé ont une masse moléculaire moyenne en masse dans la gamme de 500 à 100 000, et sont composés de 1 à 99 pour cent en poids d'oléfine, de 0,01 à 10 pour cent en poids de composé poly(siloxane) terminé par vinyle ayant une double liaison au niveau du groupe terminal et de 0,001 à 1 pour cent en poids de matériau de silane.

8. Procédé de polymérisation d'une oléfine utilisant le système de catalyseur comprenant:
(a) le catalyseur de polymérisation d'oléfine prépolymérisé selon l'une quelconque des revendications 1 à 7,
(b) un composé organométallique des métaux du groupe I ou III du Tableau Périodique,
(c) un donneur d'électrons externe.

9. Procédé de polymérisation d'oléfine selon la revendication 8, dans lequel ledit composé organométallique est un trialkylaluminium.

10. Procédé de polymérisation d'oléfine selon la revendication 8, dans lequel ledit donneur d'électron externe est un composé alcoxy cylindre.
